(19) Europäisches Patentamt
European Patent Office
Office européen des brevets

(11) **EP 4 712 116 A1**

(12) **EUROPEAN PATENT APPLICATION**
published in accordance with Art. 153(4) EPC

(43) Date of publication:
**18.03.2026 Bulletin 2026/12**

(21) Application number: **24815440.3**

(22) Date of filing: **27.05.2024**

(51) International Patent Classification (IPC):
**H01F 27/245** (2006.01)     **H01F 27/24** (2006.01)
**H01F 41/02** (2006.01)

(52) Cooperative Patent Classification (CPC):
**H01F 27/24; H01F 27/245; H01F 41/02**

(86) International application number:
**PCT/JP2024/019371**

(87) International publication number:
**WO 2024/247957 (05.12.2024 Gazette 2024/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.05.2023 JP 2023087246**

(71) Applicant: **Nippon Steel Corporation
Tokyo 100-8071 (JP)**

(72) Inventors:
• **ARAMAKI, Takashi
Tokyo 100-8071 (JP)**
• **HIRAYAMA, Ryu
Tokyo 100-8071 (JP)**
• **KAMIKAWABATA, Masahito
Tokyo 100-8071 (JP)**

(74) Representative: **Vossius & Partner
Patentanwälte Rechtsanwälte mbB
Siebertstraße 3
81675 München (DE)**

(54) **LAMINATED CORE, AND MANUFACTURING APPARATUS AND MANUFACTURING METHOD THEREFOR**

(57)     A production apparatus 100 includes a punch 12, a blanking die 14, a first holding part 16, a second holding part 18, and a heating part 20. A plurality of core sheets 1a is cut out from a steel strip 1 by the punch 12 and the blanking die 14, an outer peripheral portion of a plurality of core sheets 1a, which has been cut out, is pressurized laterally by the first holding part 16 and the plurality of core sheets 1a is pressurized downward by the punch 12, and the plurality of core sheets 1a pressurized downward by the punch 12 is heated by the heating part 20 while being held in the second holding part 18. The first holding part 16 holds the plurality of core sheets 1a at a temperature lower than a softening temperature of the adhesive layer 11b, and the heating part 20 heats the plurality of core sheets 1a held in the second holding part 18 to a temperature higher than or equal to the softening temperature.

[Fig.1]

**Description**

TECHNICAL FIELD

The present invention relates to a laminated core and a production apparatus and a production method for the same.

BACKGROUND ART

Laminated cores constructed of a plurality of electrical steel sheets stacked together have conventionally been used for cores of rotating electrical machines or the like. As one of production methods for a laminated core, there has been known a method for producing a laminated core by cutting out a core sheet of a predetermined shape from a steel strip with adhesive applied thereon and causing an obtained plurality of core sheets to adhere together.

For example, in a production method for a laminated iron core disclosed in Patent Document 1, an iron core sheet is cut out from a strip-like steel sheet and pushed into a blanking die by a blanking punch. The iron core sheet pushed into the blanking die is stacked on a previously cut iron core sheet and sequentially pushed into a squeeze ring below the blanking die. The iron core sheets pushed into the squeeze ring are tightly fit together by moving while being pressed against the inner peripheral surface of the squeeze ring. At this time, the adhesive between iron core sheets is cured by being heated by a heater, so that a laminated iron core with a predetermined number of iron core sheets fixed together is formed.

LIST OF PRIOR ART DOCUMENTS

PATENT DOCUMENT

Patent Document 1: JP2009-297758A

SUMMARY OF INVENTION

TECHNICAL PROBLEM

The method disclosed in Patent Document 1 makes it possible to continuously achieve cutting out of an iron core sheet by the blanking die and pressurization and heating of a plurality of iron core sheets in the squeeze ring. In this way, it is possible to efficiently produce a laminated iron core.

However, as a result of studies conducted by the inventors, it has been revealed that when pressurization and heating of a plurality of iron core sheets occur concurrently as described above, a compressive residual stress may be generated in obtained laminated iron cores and iron loss may increase.

Accordingly, an objective of the present invention is to provide a laminated core with low iron loss and a production method and a production apparatus for the same.

SOLUTION TO PROBLEM

A laminated core according to an embodiment of the present invention is

a laminated core with a plurality of electrical steel sheets stacked with an adhesive layer in between, wherein
an iron loss degradation rate of the laminated core relative to two layers of electrical steel sheets separated from the laminated core is 10% or less.

A plurality of projections projecting outward in a stacked direction may be formed on the electrical steel sheet at one end in the stacked direction of the laminated core.

A production method for a laminated core according to an embodiment of the present invention is performed in a production apparatus including:
a punch; a blanking die arranged below the punch; a first holding part arranged below the blanking die; a second holding part arranged below the first holding part; and a heating part arranged around the second holding part, the method including:

cutting out a plurality of core sheets from a steel strip with a thermosetting adhesive layer on a surface of the steel strip by the punch and the blanking die;

pressurizing an outer peripheral portion of the plurality of core sheets, which has been cut out, laterally by the first holding part and pressurizing the plurality of core sheets downward by the punch; and

heating, by the heating part, the plurality of core sheets pressurized downward by the punch while being held in the second holding part, wherein

in the first holding part, the plurality of core sheets is held at a temperature lower than a softening temperature of the adhesive layer, and

the heating part heats the plurality of core sheets held in the second holding part to a temperature higher than or equal to the softening temperature of the adhesive layer.

Furthermore, a production apparatus for a laminated core according to an embodiment of the present invention is an apparatus of producing a laminated core by cutting out a plurality of core sheets from a steel strip with an adhesive layer on a surface of the steel strip and causing an obtained plurality of core sheets to adhere together, including:

a punch;

a blanking die arranged below the punch;

a first holding part arranged below the blanking die;

a second holding part arranged below the first holding part; and

a heating part arranged around the second holding part, wherein

a plurality of core sheets is cut out from a steel strip by the punch and the blanking die,

an outer peripheral portion of the plurality of core sheets, which has been cut out, is pressurized laterally by the first holding part and the plurality of core sheets is pressurized downward by the punch, and

the plurality of core sheets pressurized downward by the punch is heated by the heating part while being held in the second holding part, and wherein

in the first holding part, the plurality of core sheets is held at a temperature lower than a softening temperature of the adhesive layer, and

the heating part heats the plurality of core sheets held in the second holding part to a temperature higher than or equal to the softening temperature of the adhesive layer.

A length of a portion in the first holding part brought into contact with the core sheet in an up-down direction may be 5 mm or more.

The punch may pressurize the plurality of core sheets with a pressurizing force of 2.0 MPa or less.

The heating part may include an infrared heating device.

ADVANTAGEOUS EFFECTS OF INVENTION

According to the present invention, a laminated core with low iron loss can be obtained.

BRIEF DESCRIPTION OF DRAWINGS

[Figure 1] Figure 1 is a schematic sectional view illustrating a production apparatus for a laminated core according to a first embodiment of the present invention.

[Figure 2] Figure 2 is an enlarged sectional view illustrating a surface of a steel strip and its vicinity.

[Figure 3] Figure 3 shows diagrams for describing a measurement method for iron loss.

[Figure 4] Figure 4 is a diagram for describing a production method for a laminated core according to the first embodiment of the present invention.

[Figure 5] Figure 5 is a diagram for describing a production method for a laminated core according to the first embodiment of the present invention.

[Figure 6] Figure 6 is a diagram for describing a production method for a laminated core according to the first embodiment of the present invention.

[Figure 7] Figure 7 is a diagram illustrating a modification of the production apparatus.

[Figure 8] Figure 8 is a diagram illustrating another modification of the production apparatus.

[Figure 9] Figure 9 is a diagram illustrating still another modification of the production apparatus.

[Figure 10] Figure 10 is a diagram illustrating a modification of the laminated core.

[Figure 11] Figure 11 is a schematic sectional view illustrating a production apparatus for a laminated core according to a second embodiment of the present invention.

DESCRIPTION OF EMBODIMENTS

A laminated core and a production apparatus and a production method for the same according to embodiments of the present invention will now be described with reference to drawings.

(First Embodiment)

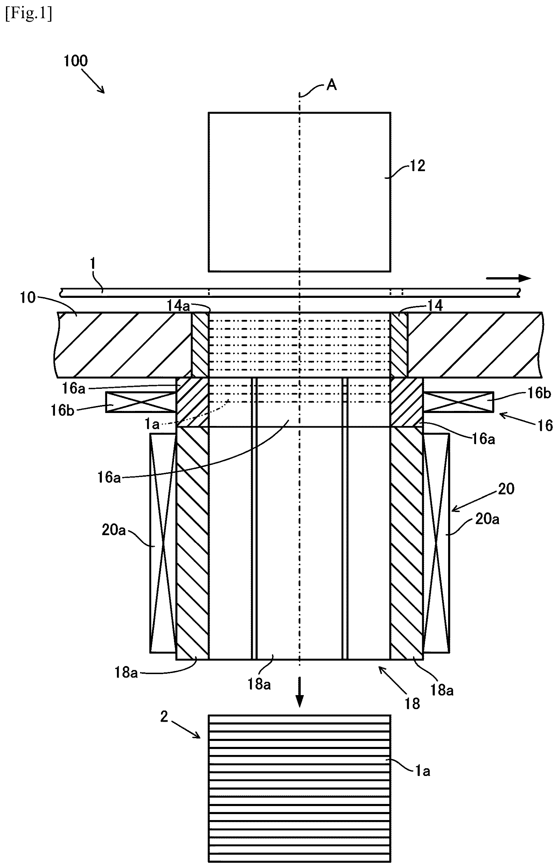

Figure 1 is a schematic sectional view illustrating a production apparatus for a laminated core according to the first embodiment of the present invention. A production apparatus 100 is an apparatus of producing a laminated core 2 by cutting out a plurality of core sheets 1a from a steel strip 1 conveyed in a predetermined direction and causing an obtained plurality of core sheets 1a to adhere together. In the embodiment, the laminated core 2 has a cylindrical shape and is for use as a stator core for a rotating electrical machine. The laminated core 2 may be a laminated core for use as a rotor core for a rotating electrical machine. Furthermore, the laminated core 2 may be one of split cores constituting the stator core. Furthermore, the laminated core 2 may be a core for other devices than the rotating electrical machine.

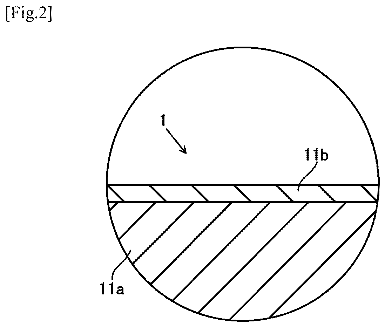

Hereinunder, the steel strip 1 will briefly be described, and thereafter, the laminated core 2 and the production apparatus 100 will be described in detail. Figure 2 is an enlarged sectional view illustrating a surface of the steel strip 1 and its vicinity.

As illustrated in Figure 2, the steel strip 1 includes a base steel sheet 11a and an adhesive layer 11b. In the embodiment, a non-oriented electrical steel sheet is used for the base steel sheet 11a, whereas an oriented electrical steel sheet may be used for the base steel sheet 11a. Note that, in the specification, the electrical steel sheet refers to a base metal portion (base steel sheet) excluding insulating films and the like. The adhesive layer 11b is formed on a surface of the base steel sheet 11a. In the embodiment, the adhesive layer 11b is formed on each of opposite surfaces of the base steel sheet 11a, whereas the adhesive layer 11b may be formed only on one surface of the base steel sheet 11a.

The chemical composition of the base steel sheet 11a contains basic elements and optional elements as necessary with the balance being Fe and impurities. In the embodiment, the chemical composition of the base steel sheet 11a contains, for example, in mass %, Si: 1.0 to 4.5%, Al: 0.1 to 1.5%, and Mn: 0.2 to 4.0% as basic elements.

The adhesive layer 11b is formed to cover the surface of the base steel sheet 11a entirely. Thermosetting resin may be used as the adhesive layer 11b. In the embodiment, in addition to a bonding capability, the adhesive layer 11b has an insulating capability. In the embodiment, the adhesive layer 11b is, for example, an insulating film that contains epoxy resin and an epoxy resin curing agent.

As such epoxy resin, epoxy resin with two or more epoxide groups per molecule can be used, for example. Such epoxy resin includes, for example, bisphenol A type epoxy resin, bisphenol F type epoxy resin, phenol novolac type epoxy resin, cresol novolac type epoxy resin, alicyclic epoxy resin, glycidyl ester type epoxy resin, glycidyl amine type epoxy resin, hydantoin type epoxy resin, isocyanurate type epoxy resin, acrylic acid-modified epoxy resin (epoxy acrylate), phosphorus-containing epoxy resin, and their halogenated derivatives (such as brominated epoxy resin) or hydrogen additives, and the like. As such epoxy resin, one type of resin may be used alone or two or more types of resin may be used in combination.

Epoxy resin curing agents include, for example, aromatic polyamines, acid anhydrides, phenolic curing agents, dicyandiamide, boron trifluoride-amine complexes, organic acid hydrazides, and the like. Aromatic polyamines include, for example, m-phenylenediamine, diaminodiphenylmethane, diaminodiphenyl sulfone, and the like. Phenolic curing agents include, for example, phenol novolac resin, cresol novolac resin, bisphenol novolac resin, triazine-modified phenol novolac resin, phenol resol resin, and the like. As such an epoxy resin curing agent, a phenolic curing agent is preferable and phenol resol resin is more preferable. As such an epoxy resin curing agent, one type of agent may be used alone or two or more types of agent may be used in combination.

Although not described in detail, the adhesive layer 11b may, for example, be an insulating film that contains acrylic resin and an acrylic resin curing agent.

Furthermore, although not described in detail, still another insulating film may be formed between the base steel sheet 11a and the adhesive layer 11b. As substances constituting the insulating film, for example, (1) inorganic compounds, (2) organic resin, and (3) a mixture of an inorganic compound and organic resin are applicable. Inorganic compounds include, for example, (1) complex of dichromate and boric acid, (2) complex of phosphate and colloidal silica, (3) phosphates, (4) Zr compounds, and (5) Ti compounds. Organic resin includes, for example, epoxy resin, acrylic resin, acrylic-styrene resin, polyester resin, silicone resin, and fluororesin.

(Configuration of Laminated Core)

As described above, the laminated core 2 is constructed of a plurality of core sheets 1a, which has been cut out from the steel strip 1, stacked together. More specifically, the laminated core 2 is constructed of a plurality of base steel sheets (electrical steel sheets) 11a, which has been cut out into a predetermined shape, stacked together by being caused to adhere together with the adhesive layer 11b. The laminated core can be obtained, for example, by stacking a plurality of core sheets 1a with the adhesive layer 11b formed on the surfaces of the core sheets and performing pressurization and heating to cause the core sheets 1a to adhere and be fixed together with the adhesive layer 11b in between.

(Measurement Method for Iron Loss Degradation Rate)

In the embodiment, the laminated core 2 is produced such that an iron loss degradation rate of the laminated core 2 relative to two layers (in the embodiment, two sheets) of base steel sheets 11a (core sheets 1a) extracted from the laminated core 2 is 10% or less. The iron loss of the laminated core 2 and two layers of base steel sheet 11a is measured as described below.

First, the iron loss of the laminated core 2 is measured. The laminated core 2 used in measurement may be the one constructed of a plurality of (two or more) base steel sheets (electrical steel sheets) 11a, which has been cut out into a predetermined shape, stacked together by being caused to adhere together with the adhesive layer 11b as described above. For example, the laminated core 2 is the one obtained in a way as described above and may be subjected to a predetermined heat treatment (such as straightening annealing). The dimension of the laminated core used in measurement is not particularly limited. The number of stacks of the electrical steel sheet constituting the laminated core is not particularly limited as well, whereas the laminated core may be the one consisting of two electrical steel sheets, for example. In the embodiment, iron loss $W_{15/50}$ (W/kg) of the laminated core 2 is measured by using a measurement device for magnetic properties (BST-L) available from BROCKHAUS.

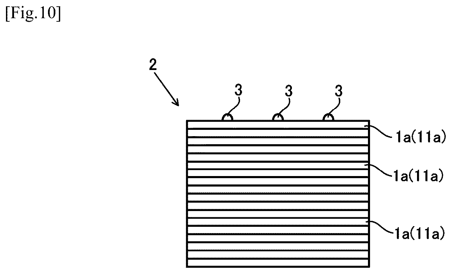

Next, two layers of core sheets 1a on which iron loss is measured are extracted from the laminated core 2. Two layers of core sheets 1a to be measured are two core sheets, which are separated from the laminated core 2 and from which the adhesive layer is removed in a way as described later. As described above, in the embodiment, the laminated core 2 has a cylindrical shape and each core sheet 1a has a circular ring shape. Accordingly, in the embodiment, two core sheets 1a near the outermost surface of the laminated core 2 are taken as two layers of core sheets 1a on which iron loss is measured. Note that it is preferable that two layers (in the embodiment, two sheets) of core sheets 1a on which iron loss is measured are two layers of core sheets 1a on one side in the thickness direction of the laminated core 2 or two layers of core sheets 1a on the other side in the thickness direction of the laminated core 2. However, in a case in which projections 3 for separating the laminated cores 2 are formed as illustrated in Figure 10 described later, two layers of core sheets 1a on the side with no projection 3 formed are taken as a subject for iron loss measurement. The dimension of each of two layers of core sheets 1a on which iron loss is measured is not particularly limited, whereas the core sheet 1a extracted from the laminated core 2 in a way as described later may be used as it is.

In the embodiment, the laminated core 2 is heated in a heating furnace at 400°C for 12 hours to carbonize the adhesive layer 11b, so that two core sheets 1a near the outermost surface of the laminated core 2 are separated. Then, surfaces of two core sheets 1a separated from the laminated core 2 are cleaned by acetone to completely remove the adhesive layer 11b from the surfaces of each core sheet 1a. Two core sheets 1a (base steel sheets 11a) from which the adhesive layer 11b is removed are stacked and a measurement device for magnetic properties (BST-L) available from BROCKHAUS is used to measure iron loss $W_{15/50}$ (W/kg). Note that in a case in which two core sheets 1a are separated from the laminated core 2 and the adhesive layer 11b is removed as described above, it is possible to remove a compressive residual stress introduced in the core sheet 1a due to pressurizing and heating processes during the production of the laminated core and by the adhesive layer 11b during adhesion when the core sheet 1a is separated and when the adhesive layer 11b is removed, while preventing iron loss of the base steel sheet 11a (core sheet 1a) from increasing. Accordingly, it is considered that iron loss of two base steel sheets 11a, which are separated from the laminated core 2 and from which the adhesive layer 11b is removed as described above is at a similar level to the iron loss of two core sheets 1a (base steel sheets 11a) before being caused to adhere together. With reference to these two core sheets 1a (base steel sheets 11a), it is possible to appropriately evaluate the effect of iron loss degradation due to pressurizing and heating processes during the production of the laminated core 2 and due to the adhesive layer 11b by calculating an iron loss degradation rate of the laminated core 2.

When the adhesive layer 11b cannot be removed under the above-described heating condition, immersing the laminated core 2 in a solvent to dissolve the adhesive layer 11b allows two core sheets 1a near the outermost surface of the laminated core 2 to be separated. In this case, it is also possible to remove a compressive residual stress generated in the base steel sheet 11a during the production of the laminated core (during adhesion) while preventing iron loss of the base steel sheet 11a from increasing. The solvent to be used may be determined depending on the components of the adhesive layer 11b. For example, in a case in which epoxy-based resin is used as the adhesive layer 11b, a ketone-based solvent (such as anone and methyl ethyl ketone) can be used. The components of the adhesive layer 11b can be examined by any known method. Furthermore, as a solvent for dissolving the adhesive layer 11b, any known solvent can be used.

In the laminated core 2 according to the embodiment, an iron loss degradation rate of the laminated core 2 relative to the iron loss of two layers (in the embodiment, two sheets) of base steel sheets 11a measured as described above is 10% or less. Specifically, the iron loss degradation rate calculated by the following formula (a) is 10% or less.

iron loss degradation rate (%) = ( (iron loss of laminated core - iron loss of two layers of base steel sheets)/iron loss of two layers of base steel sheets) $\times$ 100 $\qquad$ (a)

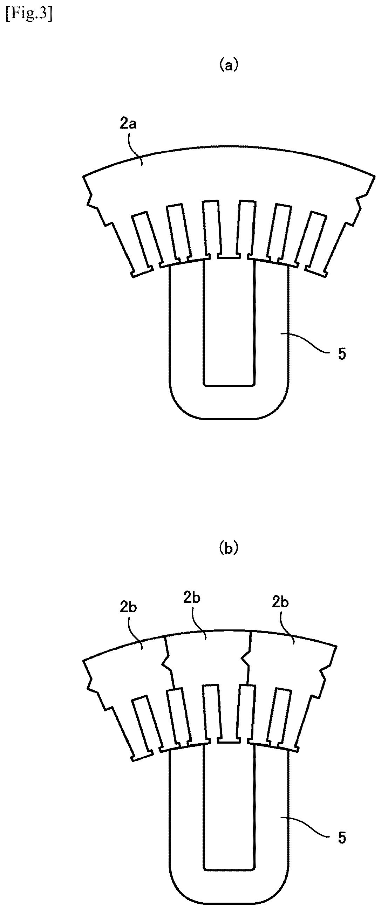

In a case in which the laminated core is one of split cores for forming a stator, the iron loss of the laminated core is measured as described below. As illustrated in Figure 3 (a), when a closed magnetic circuit can be formed by one split core 2a and a U-shaped measurement head 5 of the measurement device for magnetic properties, the iron loss measured on the split core 2a alone is taken as the iron loss of the laminated core. In this case, the iron loss of two core sheets near the outermost surface, which are separated from the split core 2a, is taken as the iron loss of the two layers of base steel sheets.

On the other hand, as illustrated in Figure 3 (b), when a closed magnetic circuit cannot be formed by one split core 2b and the measurement head 5, two or more split cores 2b are connected such that a closed magnetic circuit can be formed. Then, the iron loss measured with two or more split cores 2b connected together is taken as the iron loss of the laminated core. In this case, two core sheets near the outermost surface are separated from each split core 2b, and the iron loss measured on two or more (in this example, six) separated core sheets connected as in Figure 3 (b) is taken as the iron loss of two layers of base steel sheets.

In a case in which split cores are still incorporated in a rotating electrical machine as the stator core, the stator core extracted from the rotating electrical machine is first disassembled into a plurality of split cores. Thereafter, a measurement of iron loss is taken in a way as described above with reference to Figure 3 (a) or Figure 3 (b).

(Configuration of Production Apparatus)

Next, the production apparatus 100 will be described in detail. As illustrated in Figure 1, the production apparatus 100 according to the embodiment includes a base part 10, a punch 12, a blanking die 14, a first holding part 16, a second holding part 18, and a heating part 20. Although not illustrated, in the production apparatus 100, the steel strip 1 is subjected to predetermined processing (such as forming a slot) by using another punch and die or other tools upstream of the punch 12 and the blanking die 14 in a conveying direction of the steel strip 1. For example, as illustrated in Figure 10 described later, in a case in which a plurality of projections 3 is formed on the topmost core sheet 1a (base steel sheet 11a) of the laminated core 2, an area to be cut out as a core sheet 1a that has projections 3 in the steel strip 1 is subjected to press working for forming the projections.

The punch 12 is arranged above the base part 10 in an extendable and retractable manner in the up-down direction. The blanking die 14 is arranged below the punch 12. The blanking die 14 has a tubular shape corresponding to the external shape of the laminated core 2. In the embodiment, an opening edge 14a on an upper end side of the blanking die 14 functions as a cutting edge. In the embodiment, the opening edge 14a has a circular shape. In the embodiment, the steel strip 1 conveyed in a predetermined direction is repeatedly subjected to blanking by the punch 12 and the blanking die 14, so that a plurality of core sheets 1a is cut out from the steel strip 1.

In Figure 1, a virtual line A extending in the up-down direction passing through the center of the opening edge 14a of the blanking die 14 is indicated by a dashed line. Hereinunder, the radial direction refers to a direction that is perpendicular to the virtual line A. Hereinunder, circumferential direction refers to the direction of circumference of a virtual circle around the center of the opening edge 14a when viewed from above.

The first holding part 16 is arranged below the blanking die 14. In the embodiment, the first holding part 16 is fixed to the base part 10 by using an attaching member (not illustrated). In the embodiment, the first holding part 16 includes a plurality of holding members 16a and a plurality of pressing devices 16b.

The holding members 16a are arranged in line in the circumferential direction. Each holding member 16a is provided to be moveable in the radial direction. The pressing devices 16b each are provided for each holding member 16a. The pressing device 16b is a device for moving the holding member 16a in the radial direction. In the embodiment, the pressing device 16b includes, for example, a hydraulic device to move the pressing device 16b in the radial direction by oil pressure.

Note that it is sufficient that the first holding part 16 is configured to pressurize a plurality of core sheets 1a cut out by the punch 12 and the blanking die 14 laterally (from radially outside). Accordingly, for example, any holding member 16a of the holding members 16a may be fixed to be immovable in the radial direction. In this case, no pressing device 16b may be connected to the fixed holding member 16a. Note that the configuration of the first holding part is not limited to the above-described example, and a variety of known squeeze ring configurations may be used to form the first holding part.

The second holding part 18 is arranged below the first holding part 16. In the embodiment, the second holding part 18 is formed of a separate member from the first holding part 16. In the embodiment, the second holding part 18 is provided coaxially with the first holding part 16. In the embodiment, the second holding part 18 includes a plurality of holding members 18a provided to be moveable in the radial direction. Although not illustrated, each holding member 18a is provided with an urging device. In the embodiment, the urging device includes, for example, an elastic member such as a spring to urge the holding member 18a radially inward (toward the virtual line A). Note that the configuration of the second holding part is not limited to the above-described example, and a variety of known squeeze ring configurations may be used to form the second holding part. For example, each holding member 18a may be formed of two or more members stacked and connected together in the up-down direction.

The heating part 20 is arranged around the second holding part 18. In the embodiment, the heating part 20 is provided below the first holding part 16. In the embodiment, the heating part 20 includes a plurality of heating devices 20a. For example, an infrared heating device is used as the heating device 20a. In the embodiment, the heating device 20a is provided for each holding member 18a. Note that the configuration of the heating part 20 is not limited to the above-described example, and various heating devices capable of heating the core sheet 1a held by the second holding part 18 (holding member 18a) or the second holding part 18 may be used as the heating part. For example, a high frequency induction heating device provided around the second holding part 18 may be used as the heating part.

(Production Method for Laminated Core)

Next, a production method for the laminated core 2 by using the production apparatus 100 is described above. In the embodiment, while the steel strip 1 is being delivered from a coil (hoop material) (not illustrated) in a predetermined direction by a delivering mechanism (such as rollers) (not illustrated), a plurality of core sheets 1a is cut out from the steel strip 1 by the punch 12 and the blanking die 14 (the opening edge 14a).

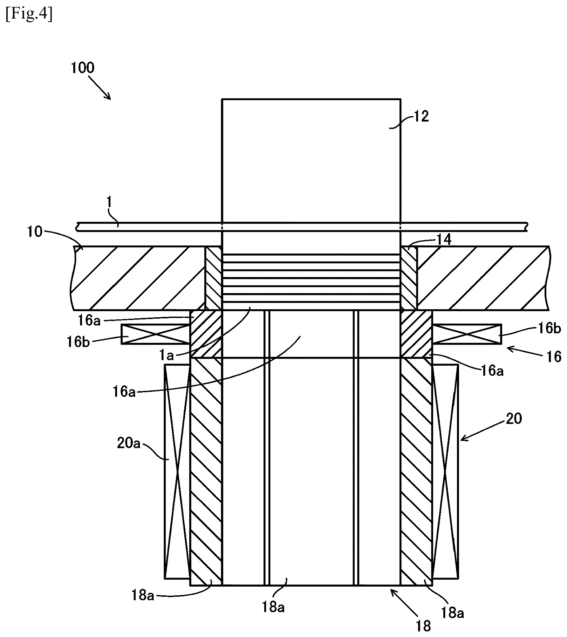

As illustrated in Figure 4, a plurality of core sheets 1a, which has been cut out, is sequentially stacked in the blanking die 14. Note that while the outer peripheral portion of the core sheet 1a cut out from the steel strip 1 comes into contact with the inner peripheral surface of the blanking die 14, in the embodiment, a large pressure is not applied to the core sheet 1a from the blanking die 14. Accordingly, the core sheet 1a cut out from the steel strip 1 by the punch 12 and the blanking die 14 (the opening edge 14a) is not held by the inner peripheral surface of the blanking die 14 and moves downward in the blanking die 14.

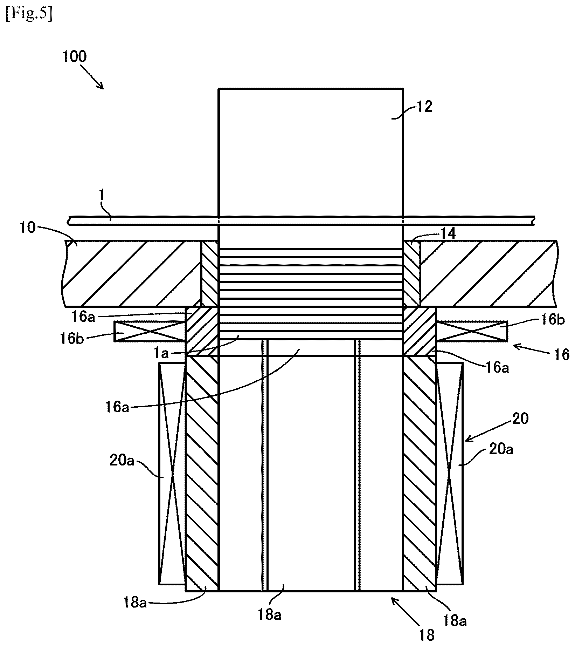

As illustrated in Figure 5, the core sheet 1a is additionally cut out from the steel strip 1, so that the core sheets 1a are sequentially pushed into the first holding part 16. In the embodiment, each time the core sheet 1a is newly cut out by the punch 12 and the blanking die 14, the core sheet 1a is pushed one by one from within the blanking die 14 into the first holding part 16.

As described above, the first holding part 16 is configured to be able to pressurize the core sheet 1a laterally (from radially outside). In the embodiment, a plurality of core sheets 1a is kept pressurized laterally in the first holding part 16. Accordingly, a pressure generated between adjacent core sheets 1a in up-down direction because the punch 12 pressurizes a plurality of core sheets 1a downward can be maintained in the first holding part 16. Accordingly, a plurality of core sheets 1a is pressurized in the up-down direction, so that adjacent base steel sheets 11a in the up-down direction are press-bonded together with the adhesive layer 11b in between in the first holding part 16. In the embodiment, a pressure larger than a pressure generated between adjacent core sheets 1a in the up-down direction due to the own weight of a plurality of core sheets 1a can be generated and maintained between adjacent core sheets 1a in the up-down direction in the first holding part 16. Note that adjacent core sheets 1a in the up-down direction, which are pressurized in the first holding part 16, are fixed together by a force (adhesion force) weaker than that on the core sheet 1a subjected to heating and pressurization in the second holding part 18 described later. That is, adjacent core sheets 1a in the up-down direction in the first holding part 16 are caused to adhere together (temporary adhesion). Note that the pressurizing force from the punch 12 to a plurality of core sheets 1a is preferably set to 2.0 MPa or less and is preferably closer to a pressure required to cut out the core sheet 1a (blanking pressure: for example, on the order of 0.1 MPa). The pressurizing force may, for example, be set to 1.8 MPa or less or may be set to 1.0 MPa or less. It may be set to 0.1 MPa or more. Furthermore, the pressurizing force from the first holding part 16 (in the embodiment, holding member 16a) to the outer peripheral portion of the core sheet 1a is, for example, set to the extent that the core sheet 1a can be prevented from falling off. In the embodiment, the pressurizing force is set such that a static friction force generated between the core sheet 1a and the first holding part 16 is larger than the weight of the core sheet 1a.

As described above, a large pressure is not applied from the inner peripheral surface of the blanking die 14 to the core sheet 1a. Accordingly, even when a pressure is generated between adjacent core sheets 1a in the up-down direction in the blanking die 14 because the punch 12 pressurizes a plurality of core sheets 1a downward, the state is not maintained. In this way, the core sheets 1a are not press-bonded together in the blanking die 14.

In the embodiment, the first holding part 16 holds a plurality of core sheets 1a at a temperature lower than the softening temperature of the adhesive layer 11b. Accordingly, softening of the adhesive layer 11b between paired adjacent base steel sheets 11a in the up-down direction is prevented before the paired base steel sheets 11a are press-bonded together in the first holding part 16. In a case in which a plurality of core sheets 1a is held at a temperature lower than the softening temperature of the adhesive layer 11b in the first holding part 16, it is possible to reduce a compressive residual stress to be generated in a resultant laminated core and inhibit an increase in iron loss even when pressurization and heating of a plurality of core sheets 1a occur concurrently. Furthermore, while the holding temperature for a plurality of core sheets 1a in the first holding part 16 is not limited as long as it is less than the softening temperature of the adhesive layer 11b, for example, it can be a temperature lower than the softening temperature of the adhesive layer 11b by 10°C or more, and it may be a temperature lower than the softening temperature of the adhesive layer 11b by 30°C or more. The lower limit of the holding temperature in the first holding part 16 is not particularly limited, whereas, for example, it may be 0°C or more or on the order of a room temperature (20°C) or more, and may be 40°C or more. Note that the holding temperature (temperature of the adhesive layer 11b) of a plurality of core sheets 1a in the first holding part 16 can be measured by a thermocouple thermometer or a radiation thermometer embedded in the first holding part 16. In the embodiment, based on the holding temperature (temperature of the adhesive layer 11b) as measured as described above, output control of the heating part 20 may be performed, as well as other actions such as adjustment of the length of the first holding part 16 in the up-down direction or provision of a thermal insulator at the boundary between the first holding part 16 and the second holding part 18 may be performed such that the temperature of the core sheet 1a (the adhesive layer 11b) in the first holding part 16 falls below the softening temperature. Furthermore, through a heating test of the heating part 20 in advance, the temperature rise behavior of the adhesive layer 11b heated by the heating part 20 may be simulated. Then, output control of the heating part 20 may be performed based on the temperature rise behavior of the adhesive layer 11b obtained by the simulation. While the temperature in the first holding part 16 may be affected and rise by the temperature in the second holding part provided in continuous to the first holding part 16, it is possible to control the temperature in the first holding part 16 below the softening temperature of the adhesive layer 11b in a way as described above. Note that, in the embodiment, it is sufficient that the holding temperature in the first holding part 16 is less than the softening temperature of the adhesive layer 11b, and operational advantages of the embodiment are not affected by the presence or absence of the heating part in the first holding part 16 nor whether the core sheet 1a is intentionally heated or not. On the other hand, from the viewpoint of further reducing a compressive residual stress to be generated in the core sheet 1a, it is preferable to inhibit a plurality of core sheets 1a from being heated in the first holding part 16. For example, it is preferable that the heating part 20 is not provided in the first holding part 16 for simplification of the apparatus and further reduction of a compressive residual stress to be generated in the core sheet 1a. Accordingly, in the embodiment, the heating part 20 is positioned below a lower end portion of the first holding part 16.

From the viewpoint of preventing the adhesive layer 11b between paired adjacent core sheets 1a (base steel sheets 11a) in the up-down direction from being softened before the paired base steel sheets 11a are press-bonded together, the length of a portion in the up-down direction of the first holding part 16 (in the embodiment, the length of the holding member 16a), which is to be brought into contact with the core sheet 1a, is preferably 5 mm or more and preferably 10 mm or more. The upper limit of the length of a portion in the up-down direction of the first holding part 16, which is to be brought into contact with the core sheet 1a, is not particularly limited, whereas it may be, for example, 160 mm or less and may also be 20 mm or less. In this case, since sufficient time for press bonding the core sheets 1a in the first holding part 16 can be secured, it is possible to appropriately press bond the core sheets 1a before the adhesive layer 11b is softened.

The softening temperature of the adhesive layer 11b can be measured by a thermomechanical analysis (TMA). Specifically, a cut plate of 7 mm × 7 mm or less is collected from the steel strip 1, and a measurement is taken for the softening temperature of the adhesive layer 11b in the penetration mode by using the collected cut plate. The probe load is set to 0.5 kgf to 2.0 kgf, and the heating rate is set to 15°C/min. Note that the probe load is adjusted as necessary based on a probe penetration depth. Specifically, first, a measurement is taken with the probe load of 0.5 kgf, and if the probe penetration depth does not match the thickness of the adhesive layer 11b, the probe load is increased such that the probe penetration depth and the thickness of the adhesive layer 11b match together for taking a measurement again. For example, the probe load is set to 1.5 kgf for taking a measurement again. The probe load for causing the probe penetration depth to match the thickness of the adhesive layer 11b varies even with the hardness of the adhesive layer 11b.

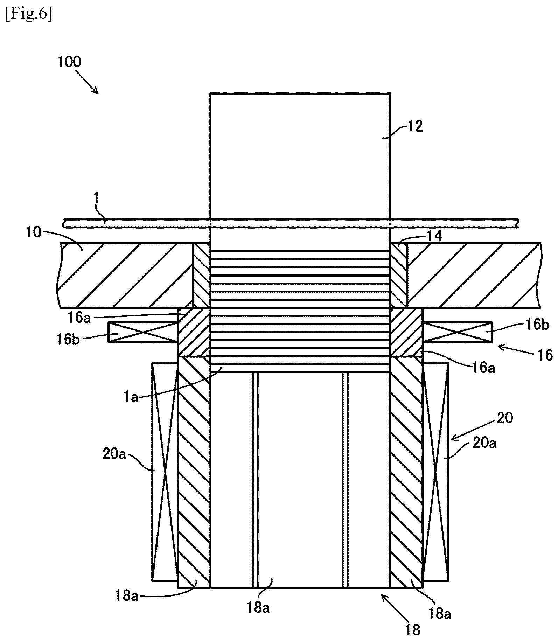

As illustrated in Figure 6, the core sheet 1a is additionally cut out from the steel strip 1, so that a plurality of core sheets 1a is sequentially pushed into the second holding part 18. In the embodiment, each time the core sheet 1a is newly cut out by the punch 12 and the blanking die 14, the core sheet 1a is pushed one by one from the first holding part 16 into the second holding part 18.

The core sheet 1a pushed into the second holding part 18 is heated by the heating part 20 and pressurized by the punch 12 while being held laterally (from radially outside) by the second holding part 18 (a plurality of holding members 18a). In the embodiment, the heating part 20 heats a plurality of core sheets 1a held in the second holding part 18 to a temperature higher than or equal to the softening temperature of the adhesive layer 11b. This allows the adhesive layer 11b on each core sheet 1a to be softened and cured in the second holding part 18, so that a plurality of core sheets 1a is fixed together. Furthermore, the core sheets 1a are pushed one by one into the second holding part 18 from the lower side and heated in order from the one pushed into the second holding part 18. Accordingly, the stacked core sheets 1a are sequentially heated from the one located at the lower side to the one located at the upper side, so that they are heated gradually from the lower side. In the embodiment, the heating part 20 heats the second holding part 18 such that the temperature of the adhesive layer 11b rises to a temperature higher than or equal to the softening temperature in the second holding part 18. Furthermore, in the embodiment, the pressurizing force laterally from the second holding part 18 to the laminated core 2 is set to the extent that the laminated core 2 can be prevented from falling off. In the embodiment, the pressurizing force is set such that a static friction force generated between the laminated core 2 and the second holding part 18 is larger than the weight of the laminated core 2. Note that it is sufficient that the heating temperature in the second holding part 18 is a temperature higher than or equal to the softening temperature of the adhesive layer 11b, whereas, for example, it may be a temperature higher than the softening temperature of the adhesive layer 11b by 10°C or more or may be a temperature higher than the softening temperature of the adhesive layer 11b by 40°C or more. While the upper limit of the heating temperature in the second holding part 18 is not particularly limited, for example, it may be 200°C or less. Furthermore, in a case in which the adhesive that forms the adhesive layer 11b is thermosetting resin, the heating part 20 heats a plurality of core sheets 1a held by the second holding part 18 to a temperature higher than or equal to the curing temperature of the adhesive layer 11b.

In a case in which an infrared heating device is used as the heating part 20, it is possible to increase the temperature of each core sheet 1a gradually from the outer peripheral portion toward the center. This allows the adhesive layer 11b of each core sheet 1a to be cured gradually from the outer peripheral portion toward the center. In this case, it is possible to prevent the adhesive from leaking between the base steel sheets 11a that are adjacent up and down in the second holding part 18. From such a viewpoint, it is preferable to use an infrared heating device as the heating part 20. In the embodiment, for example, an infrared heating device that radiates near infrared rays with a wavelength of 750 to 1000 nm is used.

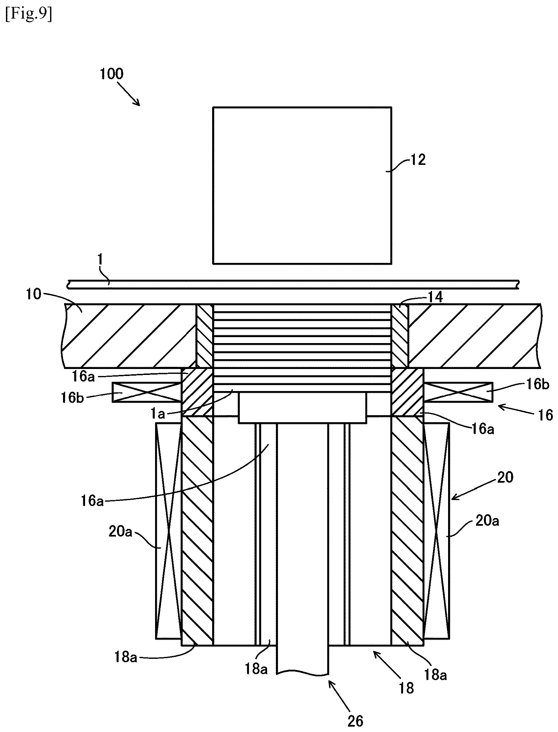

Finally, as illustrated in Figure 1, a plurality of core sheets 1a fixed together in the second holding part 18 is discharged from the second holding part 18 as the laminated core 2. In this way, the laminated core 2 is obtained. Note that, in the embodiment, the thickness of the core sheet 1a (the steel strip 1) is, for example, 0.1 mm to 0.5 mm, and the mass of the laminated core 2 is, for example, 0.1 kg to 6.0 kg. To produce a larger laminated core 2, for example, the laminated core 2 that has a mass greater than 6.0 kg, there may be a case in which it is difficult to hold the laminated core 2 only by a force of the urging device provided to the second holding part 18. In such a case, as illustrated in Figure 9 described later, it is preferable to support the laminated core 2 from below by a support device 26.

(Advantageous Effects of the Embodiment)

In the production apparatus 100 according to the embodiment, the first holding part 16 holds a plurality of core sheets 1a at a temperature lower than the softening temperature of the adhesive layer 11b. In this way, it is possible to prevent the adhesive layer 11b from being softened before adjacent core sheets 1a in the up-down direction in the first holding part 16 are pressurized, and to reduce a compressive residual stress to be generated in the core sheet 1a due to pressurization and heating of a plurality of core sheets 1a.

Here, as a result of detailed studies conducted by the inventors, it has been revealed that in a case in which heating and pressurization are started concurrently on a plurality of core sheets 1a at a temperature higher than or equal to the softening temperature of the adhesive layer 11b, a residual stress in a compression direction (residual stress acting radially inward) may be generated in the core sheet 1a. Specifically, when a plurality of core sheets 1a is pressurized while being heated to a temperature higher than or equal to the softening temperature of the adhesive layer 11b, softening of the adhesive layer 11b between paired adjacent core sheets 1a in the up-down direction progresses before the paired core sheet 1a is pressurized. In this case, a residual stress is likely to be generated in the base steel sheet 11a in the compression direction due to the difference in the amount of thermal expansion between the adhesive layer 11b and the base steel sheet 11a above or below the adhesive layer 11b and due to the contraction of the adhesive layer 11b.

On the other hand, it has been revealed that in a case in which the core sheets 1a that are adjacent up and down are pressurized while being held at a temperature lower than the softening temperature of the adhesive layer 11b in advance, and thereafter the core sheets 1a that are adjacent up and down are heated and pressurized to adhere together at a temperature higher than or equal to the softening temperature of the adhesive layer 11b, it is possible to reduce a compressive residual stress to be generated in the core sheet 1a by pressurization and heating. Furthermore, in a case in which the core sheets 1a pressurized in the up-down direction are heated in order from the core sheet 1a on the lower side, the adhesive layer 11b and the base steel sheets 11a above and below the adhesive layer 11b expand and contract in such a way that they follow one another. In this case, a residual stress can further be inhibited from being generated in the base steel sheet 11a in the compression direction. Accordingly, in the production apparatus 100 according to the embodiment, as described above, a plurality of core sheets 1a is pressurized while being held at a temperature lower than the softening temperature of the adhesive layer 11b in the first holding part 16. Thereafter, the core sheets 1a are heated and pressurized at a temperature higher than or equal to the softening temperature of the adhesive layer 11b in the second holding part 18 to cause the core sheets 1a to adhere and be fixed together. In this way, it is possible to prevent the adhesive layer 11b from being softened before adjacent core sheets 1a in the up-down direction are pressurized in the first holding part 16. As a result, a residual stress can be inhibited from being generated in the base steel sheet 11a in the compression direction in the first holding part 16, so that the iron loss of the laminated core 2 can be reduced. Furthermore, in the production apparatus 100 according to the embodiment, the blanking die 14, the first holding part 16, and the second holding part 18 are arranged continuously in the up-down direction. In such a configuration, the core sheets 1a pushed to the lower side by the punch 12 are heated one by one in order from the lower side in the second holding part 18 to a temperature higher than or equal to the softening temperature of the adhesive layer 11b. In the second holding part 18, the core sheets 1a are heated gradually from the lower side to a temperature higher than or equal to the softening temperature of the adhesive layer 11b, so that it is possible to reduce a compressive residual stress to be generated in each base steel sheet 11a and to further reduce the iron loss of the laminated core 2.

In general, to obtain a laminated core with an appropriate shape, it is necessary to apply a large pressure greater than 2.0 MPa from the punch to a plurality of core sheets and to cure the adhesive layer. However, in this case, a frictional force between the adhesive layer and the base steel sheet increases and a compressive residual stress is generated in the base steel sheet, leading to an increase in the iron loss. In contrast, in the embodiment, a plurality of core sheets 1a is heated while the outer peripheral portion of a plurality of core sheets 1a is held (in the embodiment, pressurized) laterally in the second holding part 18. In this way, it is possible to cure the adhesive layer 11b between the core sheets 1a (base steel sheets 11a) without applying a large pressure to a plurality of core sheets 1a in a stacked direction. In this case, an increase in a frictional force between the adhesive layer 11b and the base steel sheet 11a can be prevented and a compressive residual stress can sufficiently be inhibited from being generated in the base steel sheet 11a. In this way, even when a pressurizing force from the punch 12 to a plurality of core sheets 1a is as low as 2.0 MPa or less, it is possible to cause a plurality of core sheets 1a to appropriately adhere together and to obtain the laminated core 2 with an appropriate shape.

In the production apparatus 100 according to the embodiment, the first holding part 16 and the second holding part 18 are formed of a separate member from each other. More specifically, a portion in the first holding part 16 brought into contact with the core sheet 1a (in the embodiment, holding member 16a) and a portion in the second holding part 18 brought into contact with the core sheet 1a (in the embodiment, holding member 18a) are formed of a separate member from each other. In this way, the heat transfer from the second holding part 18 to the first holding part 16 is inhibited, so that temperature rise of the first holding part 16 is inhibited. As a result, it is possible to easily inhibit temperature rise of a plurality of core sheets 1a in the holding member 16a.

(Modification)

In the above-described embodiment, description has been made as to the case in which one layer of the adhesive layer 11b is provided on the surface of the base steel sheet 11a, whereas two or more layers (two or more types) of adhesive layer may be provided on the surface of the base steel sheet. In this case, a plurality of core sheets is held in the first holding part such that all adhesive layers are at a temperature lower than the softening temperature. Furthermore, the heating part heats a plurality of core sheets held in the second holding part such that all adhesive layers reach a temperature higher than or equal to softening temperature. The same applies to the embodiment described later.

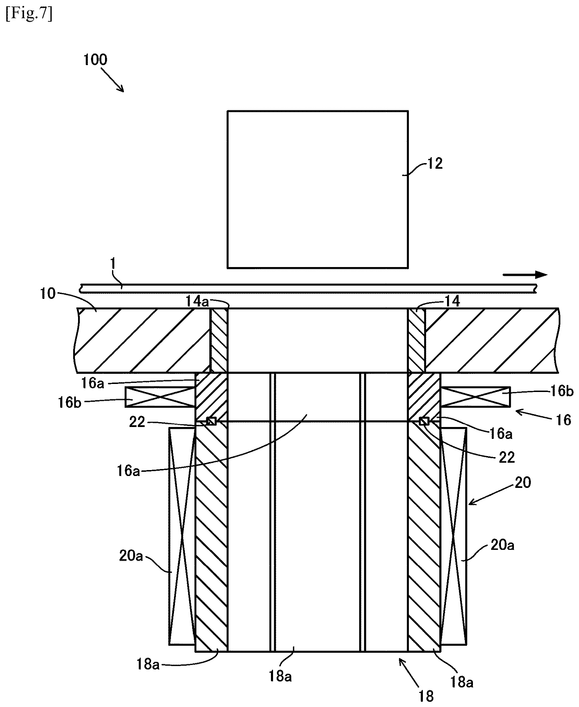

In the above-described embodiment, the first holding part 16 and the second holding part 18 are provided independently from each other, whereas as illustrated in Figure 7, the first holding part 16 and the second holding part 18 may be connected with each other by a plurality of connecting parts 22. In this case, it is possible to link the first holding part 16 and the second holding part 18 together, so that the configurations of the first holding part 16 and the second holding part 18 (the configurations for pressing the holding member 16a and the holding member 18a) can be simplified. The connecting part 22 may be a recess and a projection formed in the holding member 16a and holding member 18a. In this case, for example, the holding member 16a and the holding member 18a can be fixed by the recess and the projection rivetted together. The connecting part 22 may be a fastening member such as a bolt and a nut.

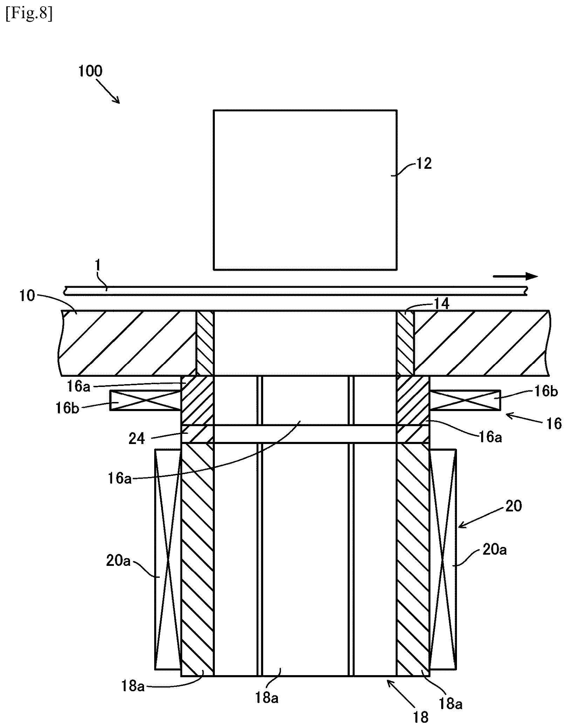

In the above-described embodiment, the second holding part 18 is arranged immediately under the first holding part 16, whereas as illustrated in Figure 8, the first holding part 16 and the second holding part 18 may be connected with a thermal insulating member 24, which has a lower thermal conductivity than the holding member 18a (a portion in the second holding part 18 brought into contact with the core sheet 1a), in between. In this case, heat transfer from the second holding part 18 to the first holding part 16 can sufficiently be inhibited and temperature rise of the first holding part 16 can sufficiently be prevented. Note that, in the embodiment, the thermal insulating member 24 constitutes a connecting part that connects the first holding part 16 and the second holding part 18.

In the above-described embodiment, a plurality of core sheets 1a is supported by pressurizing a plurality of core sheets 1a laterally in the first holding part 16 and the second holding part 18, whereas as illustrated in Figure 9, a plurality of core sheets 1a may further be supported by the support device 26 from below. In this way, it is possible to support a plurality of core sheets 1a more stably. The support device 26 is a device for supporting a plurality of core sheets 1a from below, for example, hydraulically or by an elastic force of an elastic member such as a spring.

In the above-described embodiment, all core sheets 1a (base steel sheets 11a) constituting the laminated core 2 have the same shape, whereas the shape of the laminated core 2 is not limited to the above-described example, and the shape of the core sheet 1a of one part of the laminated core 2 may be different from the shape of the core sheet 1a of the other part. For example, as in the laminated core 2 illustrated in Figure 10, a plurality of projections 3 projecting outward in a stacked direction may be formed in the core sheet 1a (base steel sheet 11a) at one end (in the embodiment, upper end) in a stacked direction. When producing two or more laminated cores 2 continuously, the laminated cores 2 can easily be separated with a plurality of projections 3 formed as described above on the core sheet 1a on the upper end of each laminated core 2. As a result, it is possible to efficiently produce a plurality of laminated cores 2.

(Second Embodiment)

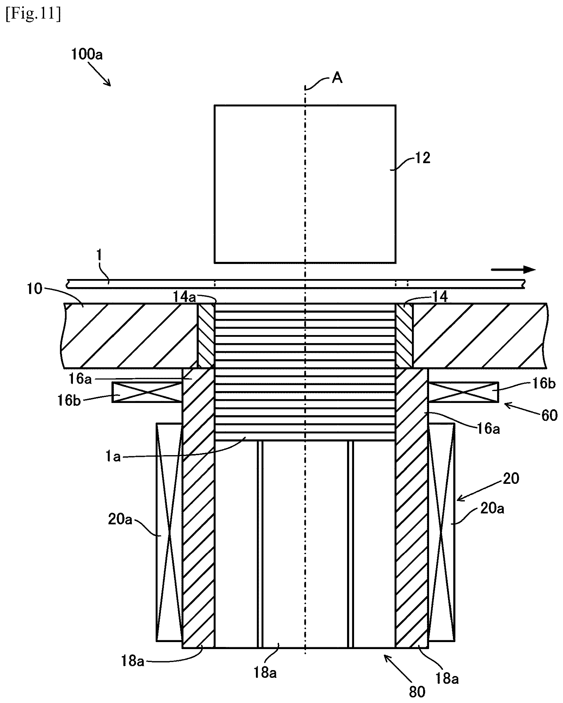

Figure 11 is a schematic sectional view illustrating a production apparatus for a laminated core according to a second embodiment of the present invention. A production apparatus 100a according to the embodiment is different from the production apparatus 100 illustrated in Figure 1 in that a first holding part 60 is provided in place of the first holding part 16 and a second holding part 80 is provided in place of the second holding part 18.

In the embodiment, the first holding part 60 includes a plurality of holding members 16a and a plurality of pressing devices 16b as in the first holding part 16 described above, and the second holding part 80 includes a plurality of holding members 18a as in the second holding part 18 described above. However, in the embodiment, a portion in the first holding part 60 brought into contact with the core sheet 1a and a portion in the second holding part 80 brought into contact with the core sheet 1a are formed of the same member. Specifically, each holding member 16a and the holding member 18a located below the holding member 16a are formed of the same member. Note that, in the embodiment, the holding member 16a refers to a portion that holds a plurality of core sheets 1a at a temperature lower than the softening temperature of the adhesive layer 11b. Furthermore, in the embodiment, the upper end portion of the holding member 18a refers to a portion that is in contact with the core sheet 1a when the temperature of core sheet 1a reaches the softening temperature of the adhesive layer 11b.

In the embodiment, the length of a portion in the first holding part 60 brought into contact with the core sheet 1a in the up-down direction (in the embodiment, the length of the holding member 16a) is preferably 5 mm or more and preferably 10 mm or more as well. Furthermore, the distance in the up-down direction between the upper end of a portion in the first holding part 60 brought into contact with the core sheet 1a (in the embodiment, the upper end of the holding member 16a) and the upper end of the heating part 20 is preferably 5 mm or more and preferably 10 mm or more. Furthermore, also in the embodiment, the pressurizing force from the punch 12 to a plurality of core sheets 1a is preferably set to 2.0 MPa or less, may be set to 1.8 MPa or less, and is more preferably closer to a pressure required to cut out the core sheet 1a (blanking pressure: for example, on the order of 0.1 MPa). Accordingly, the pressurizing force from the punch 12 to a plurality of core sheets 1a may be, for example, 0.1 MPa or more. Furthermore, the pressurizing force from the first holding part 60 (in the embodiment, the holding member 16a) to the outer peripheral portion of the core sheet 1a is set, for example, to the extent that the core sheet 1a can be prevented from falling off. In the embodiment, the pressurizing force is set such that a static friction force generated between the core sheet 1a and the first holding part 60 is larger than the weight of the core sheet 1a.

In the production apparatus 100a according to the embodiment, a plurality of core sheets 1a is also cut out from the steel strip 1 by the punch 12 and the blanking die 14 as in the production apparatus 100 according to the first embodiment described above. The outer peripheral portion of a plurality of core sheets 1a, which has been cut out, is pressurized laterally in the first holding part 60 and a plurality of core sheets 1a is pressurized downward by the punch 12 to press bond the core sheets 1a. A plurality of core sheets 1a press-bonded in the first holding part 60 is heated to a temperature higher than or equal to the softening temperature of the adhesive layer 11b by the heating part 20 in the second holding part 80. This allows the adhesive layer 11b of each core sheet 1a to be softened and cured in the second holding part 80, so that a plurality of core sheets 1a is fixed together. Thereafter, a plurality of core sheets 1a, which has been fixed together, is discharged from the second holding part 80 as the laminated core 2.

In the production apparatus 100a according to the embodiment, a plurality of core sheets 1a is also held at a temperature lower than the softening temperature of the adhesive layer 11b in the first holding part 60. In this way, it is possible to prevent the adhesive layer 11b from being softened before adjacent core sheets 1a in the up-down direction in the first holding part 60 are pressurized. As a result, a residual stress can be inhibited from being generated in each base steel sheet 11a in the compression direction, so that the iron loss of the laminated core 2 can be reduced.

Furthermore, in the production apparatus 100a according to the embodiment, it is possible to link the first holding part 60 and the second holding part 80 together, so that the configurations of the first holding part 60 and the second holding part 80 (the configurations for pressing the holding member 16a and the holding member 18a) can be simplified. In the production apparatus 100a illustrated in Figure 11, the pressing device 16b is attached to the holding member 16a, whereas the pressing device 16b may be attached to the holding member 18a. In this case, the pressing device 16b can move the holding member 16a in the radial direction through the holding member 18a.

In the embodiment, a plurality of core sheets 1a is also heated while the outer peripheral portion of a plurality of core sheets 1a is laterally (in the embodiment, pressurized) held in the second holding part 80. In this way, it is possible to cure the adhesive layer 11b between the core sheets 1a (base steel sheets 11a) without applying a large pressure to a plurality of core sheets 1a in a stacked direction. In this case, an increase in a frictional force between the adhesive layer 11b and the base steel sheet 11a can be prevented and a compressive residual stress can sufficiently be inhibited from being generated in the base steel sheet 11a. In this way, even when a pressurizing force from the punch 12 to a plurality of core sheets 1a is as low as 2.0 MPa or less, it is possible to cause a plurality of core sheets 1a to appropriately adhere together and to obtain the laminated core 2 with an appropriate shape.

Although not described in detail, still another holding part (for example, a known squeeze ring) may be provided below the second holding part 80.

The present invention will now be described in detail with reference to Example. However, the present invention is not limited to the Example.

EXAMPLE

Laminated cores of Examples 1 to 7 and comparative examples 1 to 4 were produced by using a production apparatus that has a similar configuration to the production apparatus 100 illustrated in Figure 1. The position of the heating part 20 was adjusted as necessary. Laminated cores of comparative examples 5 and 6 were produced by using a production apparatus that has a similar configuration to the production apparatus 100 illustrated in Figure 1 except for the absence of the first holding part 16. The laminated core in any of Examples and comparative examples was formed from two annular core sheets. Note that the holding temperature in the first holding part 16 was affected and increased by the heating temperature of the second holding part 18 adjacent thereto. A non-oriented electrical steel sheet was used as the base steel sheet. The adhesive layers of the laminated cores of Examples 1 to 3 and 6 and comparative examples 1, 2, and 5 were formed of epoxy-based resin and amine-based curing agents, and the adhesive layer of the laminated cores of Examples 4, 5, and 7 and comparative examples 3, 4, and 6 were formed of acrylic-based resin and amine-based curing agents.

The iron loss degradation rates were measured in a way as described above for the produced laminated cores of Examples 1 to 7 and comparative examples 1 to 6. Specifically, first, measurements were taken for iron loss $W_{15/50}$ (W/kg) of the laminated cores of Examples 1 to 7 and comparative examples 1 to 6 by a measurement device for magnetic properties (BST-L) available from BROCKHAUS. Next, the laminated cores were heated in a heating furnace at 400°C for 12 hours to carbonize the adhesive layers, so that two core sheets of the laminated cores were separated. Then, surfaces of two separated core sheets were cleaned by acetone to completely remove the adhesive layer from the surfaces of each core sheet, thereafter the two core sheets (base steel sheets) were stacked, and a measurement was taken for the iron loss $W_{15/50}$ (W/kg) by the measurement device for magnetic properties (BST-L) available from BROCKHAUS. Furthermore, the iron loss degradation rate of each laminated core of Examples and comparative examples was calculated according to the above-described formula (a). Note that, comparing the iron loss of a laminated core that has three layers or more with the iron loss of a laminated core that has two layers, which have been produced under the same conditions, the iron loss of a laminated core that has two layers is generally larger. Accordingly, in Examples and comparative examples, the iron loss degradation rate of two layers of laminated core was evaluated. When the iron loss degradation rate of two layers of laminated core as determined according to the above-described formula (a) is 10% or less, it is considered that the iron loss degradation rate of a laminated core that has three layers or more produced under the same conditions as the two layers of laminated core will be 10% or less. Note that the magnetic flux density during the iron loss measurement was set to 1.5 T and the frequency was set to 50 Hz. Types of resin of adhesive layers, softening temperature of adhesive layers, production conditions of laminated cores, measurement results of iron loss, and calculation results of iron loss degradation rates are shown in Table 1 below.

[Table 1]

Table 1

| | Adhesive layer | | Production conditions | | | | Iron loss W15/50 (W/kg) | | Iron loss degradation rate (%) |
| --- | --- | --- | --- | --- | --- | --- | --- | --- | --- |
| | Type of resin | Softening temperature (°C) | Punch pressurizing force (MPa) | Length of first holding part (mm) | Holding temperature of first holding part (°C) | Heating temperature of second holding part (°C) | Laminated core (unseparated) | After separation | |
| Example 1 | Epoxy | 110 | 1.0 | 15 | 90 | 150 | 2.08 | 2.02 | 3 |
| Example 2 | Epoxy | 130 | 0.5 | 15 | 100 | 200 | 2.07 | 2.03 | 2 |
| Example 3 | Epoxy | 100 | 1.8 | 7 | 90 | 120 | 2.12 | 2.00 | 6 |
| Example 4 | Acrylic | 70 | 1.0 | 5 | 40 | 80 | 2.59 | 2.51 | 3 |
| Example 5 | Acrylic | 100 | 1.8 | 10 | 80 | 140 | 2.64 | 2.47 | 7 |
| Example 6 | Epoxy | 80 | 2.4 | 14 | 70 | 170 | 2.20 | 2.02 | 9 |
| Example 7 | Acrylic | 50 | 2.3 | 16 | 40 | 165 | 2.68 | 2.44 | 10 |
| Comparative example 1 | Epoxy | 80 | 1.0 | 2 | 130 | 150 | 2.34 | 2.00 | 17 |
| Comparative example 2 | Epoxy | 80 | 1.8 | 4 | 90 | 120 | 2.29 | 2.01 | 14 |
| Comparative example 3 | Acrylic | 50 | 1.0 | 3 | 60 | 80 | 2.83 | 2.44 | 16 |
| Comparative example 4 | Acrylic | 90 | 1.8 | 4 | 110 | 140 | 2.71 | 2.36 | 15 |
| Comparative example 5 | Epoxy | 80 | 1.5 | - | - | 150 | 2.35 | 1.99 | 18 |
| Comparative example 6 | Acrylic | 50 | 1.5 | - | - | 120 | 2.99 | 2.49 | 20 |

The softening temperature of the adhesive layer in Table 1 was measured by a thermomechanical analysis (TMA) for a cut plate collected from a steel strip, which was a starting material of the core sheet. Furthermore, the holding temperature of the first holding part in Table 1 refers to the highest temperature of the core sheet in the first holding part 16. Furthermore, the heating temperature of the second holding part in Table 1 refers to the highest temperature of the core sheet in the second holding part 18. For the comparative examples 5 and 6, however, the heating temperature of the second holding part refers to the temperature of the core sheet at the upper end portion in the second holding part 18. The lowest temperature of the core sheet in the first holding part 16 was higher than or equal to the softening temperature for any of comparative examples 1 to 4. The temperature of the core sheet in the first holding part 16 was measured by a thermocouple thermometer, a plurality of which was arranged in line in the up-down direction in the first holding part 16. Likewise, the temperature of the core sheet in the second holding part 18 was measured by a thermocouple thermometer, a plurality of which was arranged in line in the up-down direction in the second holding part 18.

As shown in Table 1, in Examples 1 to 7, in which the core sheet was held at a temperature lower than the softening temperature of the adhesive layer in the first holding part 16, an iron loss degradation rate of the laminated core was 10% or less and the iron loss degradation could be inhibited. In particular, in Examples 1 to 5, in which the pressurizing force from the punch 12 to the core sheet was set to 2.0 MPa or less, the iron loss degradation rate of laminated core was 7% or less and the iron loss degradation could sufficiently be inhibited.

On the other hand, in comparative examples 1 to 4, in which the core sheet was held at a temperature higher than or equal to the softening temperature of the adhesive layer in the first holding part 16, the iron loss degradation rate of the laminated core was 14% or more. In addition, in comparative examples 5 and 6, in which the core sheet was held at a temperature higher than or equal to the softening temperature of the adhesive layer at the upper end portion in the second holding part 18 without the first holding part 16 being provided, the iron loss degradation rate of the laminated core was 18% or more. As described above, in comparative examples 1 to 6, the iron loss degradation of the laminated core was larger than Examples 1 to 7.

INDUSTRIAL APPLICABILITY

According to the present invention, it is possible to produce a laminated core with low iron loss.

REFERENCE SIGNS LIST

1: steel strip
2: laminated core
3: projection
10: base part
12: punch
14: blanking die
16, 60: first holding part
18, 80: second holding part
20: heating part
22: connecting part
24: thermal insulating member
26: support device
100, 100a: production apparatus

**Claims**

1.  A laminated core with a plurality of electrical steel sheets stacked with an adhesive layer in between, wherein an iron loss degradation rate of the laminated core relative to two layers of electrical steel sheets separated from the laminated core is 10% or less.

2.  The laminated core according to claim 1, wherein a plurality of projections projecting outward in a stacked direction is formed on the electrical steel sheet at one end in the stacked direction.

3.  A production method for a laminated core performed in a production apparatus including: a punch; a blanking die arranged below the punch; a first holding part arranged below the blanking die; a second holding part arranged below the first holding part; and a heating part arranged around the second holding part, the method comprising:

cutting out a plurality of core sheets from a steel strip with a thermosetting adhesive layer on a surface of the steel strip by the punch and the blanking die;
pressurizing an outer peripheral portion of the plurality of core sheets, which has been cut out, laterally by the first holding part and pressurizing the plurality of core sheets downward by the punch; and
heating, by the heating part, the plurality of core sheets pressurized downward by the punch while being held in the second holding part, wherein
in the first holding part, the plurality of core sheets is held at a temperature lower than a softening temperature of the adhesive layer, and
the heating part heats the plurality of core sheets held in the second holding part to a temperature higher than or equal to the softening temperature of the adhesive layer.

4. The production method for a laminated core according to claim 3, wherein a length of a portion in the first holding part brought into contact with the core sheet in an up-down direction is 5 mm or more.

5. The production method for a laminated core according to claim 3 or 4, wherein the punch pressurizes the plurality of core sheets with a pressurizing force of 2.0 MPa or less.

6. The production method for a laminated core according to any of claims 3 to 5, wherein the heating part includes an infrared heating device.

7. An apparatus of producing a laminated core by cutting out a plurality of core sheets from a steel strip with an adhesive layer on a surface of the steel strip and causing an obtained plurality of core sheets to adhere together, the production apparatus for a laminated core comprising:

a punch;
a blanking die arranged below the punch;
a first holding part arranged below the blanking die;
a second holding part arranged below the first holding part; and
a heating part arranged around the second holding part, wherein
a plurality of core sheets is cut out from a steel strip by the punch and the blanking die,
an outer peripheral portion of the plurality of core sheets, which has been cut out, is pressurized laterally by the first holding part and the plurality of core sheets is pressurized downward by the punch, and
the plurality of core sheets pressurized downward by the punch is heated by the heating part while being held in the second holding part, and wherein
in the first holding part, the plurality of core sheets is held at a temperature lower than a softening temperature of the adhesive layer, and
the heating part heats the plurality of core sheets held in the second holding part to a temperature higher than or equal to the softening temperature of the adhesive layer.

8. The production apparatus for a laminated core according to claim 7, wherein a length of a portion in the first holding part brought into contact with the core sheet in an up-down direction is 5 mm or more.

9. The production apparatus for a laminated core according to claim 7 or 8, wherein the punch pressurizes the plurality of core sheets with a pressurizing force of 2.0 MPa or less.

10. The production apparatus for a laminated core according to any of claims 7 to 9, wherein the heating part includes an infrared heating device.

[Fig.1]

[Fig.2]

[Fig.3]

(a)

(b)

[Fig.4]

[Fig.5]

100

12

1

10

14

16a

16b

16b

1a

16b

16

16a

16a

20

20a

20a

18a

18a

18a

18a

18

[Fig.6]

[Fig.7]

[Fig.8]

[Fig.9]

[Fig.10]

[Fig.11]

## INTERNATIONAL SEARCH REPORT

| International application No. |
| --- |
| **PCT/JP2024/019371** |

### A. CLASSIFICATION OF SUBJECT MATTER

*H01F 27/245*(2006.01)i; *H01F 27/24*(2006.01)i; *H01F 41/02*(2006.01)i
FI: H01F27/245; H01F41/02 B; H01F27/24 Q

According to International Patent Classification (IPC) or to both national classification and IPC

### B. FIELDS SEARCHED

Minimum documentation searched (classification system followed by classification symbols)

H01F27/245; H01F27/24; H01F41/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | WO 2022/260226 A1 (BMC CO., LTD.) 15 December 2022 (2022-12-15) paragraphs [0001]-[0058], fig. 1-7 | 1, 3-10 |
| Y | | 2 |
| Y | JP 2019-504610 A (POSCO DAEWOO CORPORATION) 14 February 2019 (2019-02-14) paragraphs [0001]-[0204], fig. 1-23 | 2 |
| Y | WO 2018/038357 A1 (HANGNAM CO., LTD.) 01 March 2018 (2018-03-01) paragraphs [0001]-[0074], fig. 1-7 | 2 |
| A | WO 2022/260225 A1 (BMC CO., LTD.) 15 December 2022 (2022-12-15) entire text, all drawings | 1-10 |
| A | WO 2016/071943 A1 (KURODA PRECISION INDUSTRIES LTD.) 12 May 2016 (2016-05-12) entire text, all drawings | 1-10 |

☑ Further documents are listed in the continuation of Box C.     ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **31 July 2024** | **13 August 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

| International application No. |
|---|
| **PCT/JP2024/019371** |

| C. | DOCUMENTS CONSIDERED TO BE RELEVANT | |
|---|---|---|
| Category* | Citation of document, with indication, where appropriate, of the relevant passages | Relevant to claim No. |
| A | JP 2009-297758 A (KURODA PRECISION INDUSTRIES LTD.) 24 December 2009 (2009-12-24)<br>  entire text, all drawings | 1-10 |

Form PCT/ISA/210 (second sheet) (July 2022)

EP 4 712 116 A1

## INTERNATIONAL SEARCH REPORT
### Information on patent family members

International application No.

**PCT/JP2024/019371**

| Patent document cited in search report | | | Publication date (day/month/year) | Patent family member(s) | | | Publication date (day/month/year) |
|---|---|---|---|---|---|---|---|
| WO | 2022/260226 | A1 | 15 December 2022 | EP | 4352863 | A1 | |
| | | | | KR | 10-2022-0166994 | A | |
| | | | | CN | 117378132 | A | |
| | | | | JP | 2024-519987 | A | |
| JP | 2019-504610 | A | 14 February 2019 | WO | 2017/111249 | A1 | |
| | | | | paragraphs [0001]-[0226], fig. 1-23 | | | |
| | | | | KR | 10-2017-0074491 | A | |
| | | | | CN | 108430774 | A | |
| | | | | US | 2018/0374625 | A1 | |
| WO | 2018/038357 | A1 | 01 March 2018 | US | 2021/0281151 | A1 | |
| | | | | KR | 10-2018-0021495 | A | |
| | | | | CN | 109478833 | A | |
| | | | | KR | 10-2018-0021626 | A | |
| WO | 2022/260225 | A1 | 15 December 2022 | JP | 2024-519226 | A | |
| | | | | EP | 4352862 | A1 | |
| | | | | KR | 10-2022-0165950 | A | |
| | | | | CN | 117356020 | A | |
| WO | 2016/071943 | A1 | 12 May 2016 | US | 2017/0297078 | A1 | |
| | | | | entire text, all drawings | | | |
| | | | | EP | 3217520 | A1 | |
| | | | | CN | 106716796 | A | |
| JP | 2009-297758 | A | 24 December 2009 | (Family: none) | | | |

## EP 4 712 116 A1

**Patent documents cited in the description**

- JP 2009297758 A